(19) Europäisches Patentamt
European Patent Office
Office européen des brevets

(11) Veröffentlichungsnummer: **0 212 483**
**A2**

(12) **EUROPÄISCHE PATENTANMELDUNG**

(21) Anmeldenummer: **86110955.1**

(22) Anmeldetag: **08.08.86**

(51) Int. Cl.⁴: **C 08 G 59/50**, C 09 D 5/44

(30) Priorität: **17.08.85 DE 3529502**
**18.07.86 DE 3624313**

(43) Veröffentlichungstag der Anmeldung: **04.03.87**
**Patentblatt 87/10**

(84) Benannte Vertragsstaaten: **AT BE DE FR GB IT NL SE**

(71) Anmelder: **HOECHST AKTIENGESELLSCHAFT,**
**Postfach 80 03 20, D-6230 Frankfurt am Main 80 (DE)**

(72) Erfinder: **Kiessling, Hans-Joachim, Dr., Eppenhainer Weg 20a, D-6239 Eppstein/Taunus (DE)**
Erfinder: **Riemenschneider, Wilhelm, Dr., Loreleistrasse 45, D-6230 Frankfurt am Main 80 (DE)**

(54) **Verfahren zur Herstellung von Beta-Hydroxypolyaminen durch Umsetzung von Epoxidharzen mit Ammoniak.**

(57) Verfahren zur Herstellung von β-Hydroxypolyaminen durch Umsetzung von Polyepoxidverbindungen mit Ammoniak, bei dem mindestens eine Polyepoxidverbindung in einer ersten Stufe bei Temperaturen unterhalb 50°C mit flüssigem Ammoniak unter Bildung einer homogenen Phase behandelt wird, worauf in einer zweiten Stufe die Reaktion zwischen der Polyepoxidverbindung und Ammoniak bei 60 bis 130°C vorgenommen wird und das überschüssige Ammoniak nach vollendeter Reaktion aus der Reaktionsmischung entfernt wird.

Verwendet werden die erhaltenen β-Hydroxypolyamine als Bindemittel oder - in protonierter Form - als wasserverdünnbare Bindemittel, allein oder in Kombination mit geeigneten Vernetzern.

EP 0 212 483 A2

Verfahren zur Herstellung von β-Hydroxypolyaminen durch Umsetzung von Epoxidharzen mit Ammoniak

Die Umsetzung von Epoxidverbindungen mit primären oder sekundären Aminen ist in der Literatur häufig beschrieben worden. Dagegen finden sich hinsichtlich der Reaktion zwischen Polyepoxiden und Ammoniak nur wenige Hinweise.

In der DE-OS 1 495 537 wird die Umsetzung von Epoxidverbindungen in Anwesenheit von Emulgatoren und/oder Schutzkolloiden mit Ammoniak beschrieben.

In der DE-OS 1 947 879 wird die Umsetzung von Epoxidharzen auf Bisphenol-A-Basis mit Ammoniak zu β-Hydroxypolyaminen beschrieben. Die Umsetzung wird mit einem großen Überschuß von Ammoniak durchgeführt, besonders bevorzugt ist ein Verhältnis von 50 bis 100 Mol Ammoniak pro Epoxidäquivalent.

In der DE-AS 29 14 331, die selbstvernetzende kationische Bindemittel beschreibt, werden Di- oder Polyepoxidverbindungen mit Ammoniak in solchen Mengenverhältnissen zur Reaktion gebracht, daß auf jede Epoxidgruppe 1,75 bis 10 Mole Ammoniak entfallen.

Betrachtet man die Ausführungsbeispiele dieser Veröffentlichungen, so stellt man fest, daß in allen Fällen die Umsetzungen in Gegenwart von größeren Mengen an Lösungsmitteln vorgenommen werden. In der DE-OS 1 947 879 beträgt z.B. der Lösungsmittelanteil bezogen auf das eingesetzte Epoxidharz über 85 Gew.-%, vorzugsweise über 90 Gew.-%, in der DE-AS 29 14 331 über 55 Gew.-%. Als Vorteil wird angegeben, daß durch die Lösungsmittel das Mischen erleichtert wird, die Viskosität herabgesetzt und der Wärmeaustausch in den Reaktionsgemischen verbessert wird. In der Literatur werden jedoch keine konkreten

Angaben gemacht, unter welchen Bedingungen eine Umsetzung von Polyepoxiden und Ammoniak ohne Verwendung größerer Lösungsmittelmengen möglich ist.

Da bei den bekannten Verfahren größere Mengen an Lösungsmitteln bei der Umsetzung eingesetzt werden, ist eine Rückgewinnung der Lösungsmittel nötig, d.h. zur Abtrennung des nicht umgesetzten Ammoniaks vom Lösungsmittel müssen destillative Trennverfahren angewandt werden.

Aufgabe der vorliegenden Erfindung ist es, ein neues Verfahren zur Verfügung zu stellen, das ohne größere Mengen an Lösungsmitteln, ja sogar ohne Lösungsmittelzusatz, auskommt und damit einfacher und wirtschaftlicher arbeitet.

Gegenstand der Erfindung ist daher ein Verfahren zur Herstellung von β-Hydroxypolyaminen durch Umsetzung von Poly-Epoxiden mit Ammoniak, das dadurch gekennzeichnet ist, daß mindestens eine Polyepoxidverbindung in einer ersten Stufe bei Temperaturen unterhalb 50°C mit flüssigem Ammoniak in Abwesenheit von größeren Mengen an Lösungsmitteln oder ohne jeden Lösungsmittelzusatz unter Bildung einer homogenen Phase behandelt wird, worauf in einer zweiten Stufe die Reaktion zwischen den Polyepoxidverbindungen und Ammoniak bei 60 bis 130°C vorgenommen wird und das überschüssige Ammoniak nach vollendeter Reaktion aus der Reaktionsmischung entfernt wird.

Das erfindungsgemäße Verfahren hat den Vorteil, daß in den Reaktionsprodukten keine destillativ zu entfernenden grösseren Lösungsmittelmengen oder bei lösungsmittelfreier Arbeitsweise überhaupt keine Lösungsmittelreste vorhanden sind, die Wärmeenergie des Reaktionsansatzes beim Abdestillieren des überschüssigen Ammoniaks ausgenutzt wird und somit ein energiesparendes und umweltfreundliches

Verfahren eingeführt werden kann. Das zurückerhaltene Ammoniak, insbesondere das aus der lösungsmittelfreien Arbeitsweise, kann für weitere Ansätze ohne weitere Reinigung zur Verfügung stehen.

Die Temperatur in der ersten Stufe des Verfahrens liegt vorzugsweise unter 30°C, während die Temperatur zur vollständigen Umsetzung der Epoxidgruppen mit Ammoniak vorzugsweise 70 bis 110°C beträgt. Das überschüssige Ammoniak wird nach beendeter Reaktion während oder nach der Abkühlung aus der Reaktionsmischung entfernt. Vorteilhaft kann die Abdestillation des Ammoniaks vom nicht flüchtigen β-Hydroxypolyamin während der Druckentspannung unter Abkühlung der Reaktionsmischung erfolgen, so daß die Wärmeenergie des Reaktionsansatzes zur Entfernung des Ammoniak-Überschusses genutzt wird.

Das neue Verfahren ermöglicht einmal die Umsetzung von viskosen, flüssigen Epoxidverbindungen mit mehr als einer Epoxidgruppe im Molekül ohne Lösungsmittelzusatz, die bei 25°C Viskositäten von über 1000 bis 25000 mPa•s, besonders aber von über 3000 bis 15000 mPa•s aufweisen, zum anderen aber auch die Umsetzung von höher viskosen Epoxidflüssig- oder -festharzen mit geringen Lösungsmittelzusätzen von 5 bis 40 Gew.-%, vorzugsweise von 10 bis 35 Gew.-%, bezogen auf die eingesetzte Menge Epoxidverbindung, wenn dieser Lösungsmittelzusatz die Viskosität des Epoxidharzes bei 25°C auf unter 25000 mPa•s, vorzugsweise auf unter 15000 mPa•s herabsetzt. Als Lösungsmittel in Betracht kommen Alkohole, Glykolether, aromatische Kohlenwasserstoffe, aromatisch-aliphatische Kohlenwasserstoffe, gegebenenfalls auch Lösungsmittelgemische. Bevorzugt sind Lösungsmittel, die wesentlich weniger flüchtig sind als Ammoniak mit Siedepunkten bei Normaldruck über 60°C, vorzugsweise von über 80°C, wie Ethanol, Butanole, Ethylenglykolmonomethylether,

Propylenglykolmonomethylether, Dipropylenglykolmonomethylether, Toluol, Xylole. Bei der Auswahl des Lösungsmittels ist auch der Verwendungszweck des herzustellenden Polyamins zu berücksichtigen.

Für das erfindungsgemäße Verfahren besonders geeignet sind Epoxidverbindungen mit folgenden Strukturen:

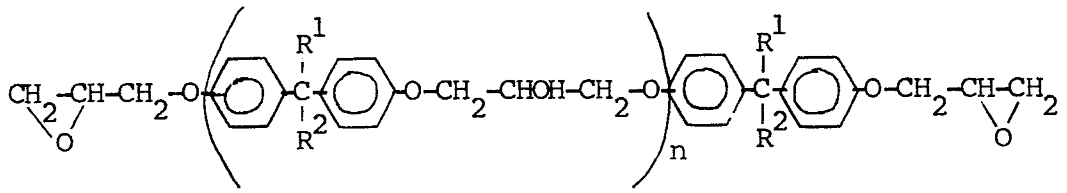 (I)

und/oder (II)

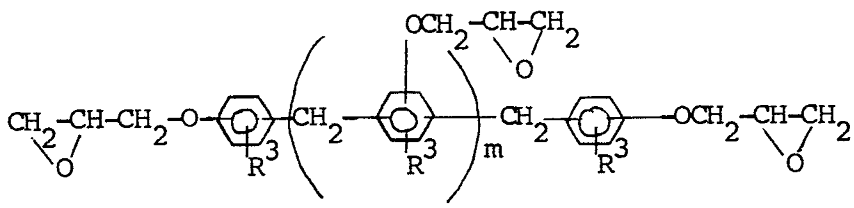

In den Formeln bedeuten $R^1$, $R^2$, $R^3$ Wasserstoff oder aliphatische Alkylreste mit bis zu 4 C-Atomen, vorzugsweise aber Wasserstoff oder Methylgruppen. Im allgemeinen liegt das durchschnittliche Molekulargewicht bei Formel I zwischen 312 und 2000, vorzugsweise 312 und 1100, bei Formel II zwischen 474 und 2100, vorzugsweise zwischen 474 und 1200. Dementsprechend besitzt n in der Formel I Durchschnittswerte von 0 bis 5,9, vorzugsweise bis 2,6, und m in Formel II Durchschnittswerte von 1 bis 11, vorzugsweise 1 bis 5,5.

Die Epoxyäquivalentgewichte der Epoxidharze der Formel I liegen im allgemeinen zwischen ca. 150 und 1000, vorzugsweise zwischen 156 und 550, bei den Harzen der Formel II zwischen ca. 230 und 1050, vorzugsweise 237 und 600.

Epoxidverbindungen mit Strukturen der Formel I erhält man durch Umsetzung von Bisphenolen und Epichlorhydrin, solche mit Strukturen der Formel II aus Novolaken und Epichlorhydrin. Es können auch Mischungen derartiger Verbindungen verwendet werden.

Das Mischungsverhältnis zwischen Polyepoxid und Epoxidharzlösung und Ammoniak hängt vom Äquivalentgewicht des eingesetzten Epoxidharzes ab. Bei Epoxidflüssigharzen mit Epoxidäquivalentgewichten unter 200 wird das Mischungsverhältnis so bemessen, daß, bezogen auf das Volumen des eingesetzten Epoxidharzes (100 %ig), die 2,5- bis 25-fache, vorzugsweise 4- bis 10-fache Volumenmenge Ammoniak eingesetzt wird. Bei Epoxidharzen mit Äquivalentgewichten von über 200, insbesondere von über 300, die bei Temperaturen von 10 bis 25°C meist als höher viskose Epoxidflüssig- oder als Festharze vorliegen und deshalb durch Zusatz von Lösungsmitteln verflüssigt werden müssen, ist ein solcher Ammoniaküberschuß wegen des niedrigeren Gehaltes an Epoxidgruppen in diesen Epoxidharzen nicht mehr erforderlich. Das Volumenverhältnis von Epoxidharz zu Ammoniak beträgt im allgemeinen bei diesen Harzen 1 : 0,3 bis 2,5, vorzugsweise 1 : 0,4 bis 1,9.

Die Zeitdauer der ersten Reaktionsstufe, d. h. die Überführung der Epoxidverbindung-Ammoniak-Mischung in eine homogene Phase bei Temperaturen unterhalb 50°C, soll möglichst kurz sein. Dazu ist die intensive Durchmischung von Epoxidverbindungen und Ammoniak bei Temperaturen von unter 50°C, vorzugsweise von unter 30°C, erforderlich. Hierfür können Mischer oder Mischvorrichtungen der verschiedensten Bauart Verwendung finden. Die erste Reaktionsstufe kann Sekunden bis Stunden dauern, abhängig von Größe, Form und Geometrie der Vorrichtung und der Art der Durchmischung. Verwendbar sind auch Vorrichtungen, bei denen die intensive Durchmischung durch kräftiges Schütteln erfolgt.

Da die intensive Durchmischung der Reaktionspartner nur in der ersten Stufe von Bedeutung ist, kann die zweite

Reaktionsstufe bei 60 bis 130°C ohne besondere Mischvorrichtungen diskontinuierlich in einem Druckgefäß oder kontinuierlich, z. B. in einem Rohrreaktor, durchgeführt werden. Die Zeit bis zum vollständigen Umsatz der Epoxidgruppen in der zweiten Stufe hängt von der gewählten Reaktionstemperatur ab. Im allgemeinen sind Reaktionszeiten zwischen 2 und 10, insbesondere 2 und 5 Stunden, ausreichend.

Nach der vollständigen Umsetzung der Epoxidgruppen in der zweiten Stufe besteht die Reaktionsmischung im wesentlichen nur aus den β-Hydroxypolyaminen und dem überschüssig angewandten Ammoniak. Somit ist eine problemlose Entfernung des leicht flüchtigen Ammoniaks vom weniger flüchtigen Lösungsmittel und Polyamin möglich und die Anwendung aufwendiger destillativer Trennverfahren bei der Aufarbeitung des Umsetzungsproduktes nicht erforderlich.

Die nach dem Verfahren erhaltenen β-Hydroxypolyamine eignen sich als Alleinbindemittel und als Bindemittel in Kombination mit Vernetzern für Überzüge, Imprägnierungen von Geweben oder porösen Massen, ferner - nach Protonierung mit Säure - auch als Bindemittel in wäßrigen Systemen.

Die erfindungsgemäß hergestellten β-Hydroxypolyamine sind selbstvernetzend und deshalb als Bindemittel allein einsetzbar. Vorteilhaft werden diese β-Hydroxypolyamine jedoch unter Ausnutzung der im Molekül vorhandenen reaktiven NH- und OH-Bindungen mit geeigneten Vernetzern eingesetzt.

Geeignete Vernetzer sind z.B. Polyepoxyverbindungen oder Epoxidharze, polyfunktionelle Verbindungen oder Harze, die zur Michael-Addition befähigte Doppelbindungen tragen, Polyisocyanate, Polyurethane, Phenolharze, Aminharze wie Harnstoff- und Melaminharze, polyfunktionelle Verbindungen

oder Harze mit labilen Esterbindungen wie Malonsäureester, Acetessigsäureäthylester, β-Hydroxyester. Mit Hilfe solcher Vernetzer kann die Härtung der erfindungsgemäß hergestellten β-Hydroxypolyamine in einem breiten Temperaturbereich erfolgen, z.B. vernetzen aromatische Polyisocyanate bereits bei Temperaturen unter 0°C, Trimethylolpropantriacrylat bei Raumtemperatur und Malonsäureester oder Acetessigester im Temperaturbereich von 80 bis 150°C.

Die nach dem erfindungsgemäßen Verfahren erhaltenen β-Hydroxypolyamine können auch gemeinsam mit anderen Bindemitteln, die Amin- und/oder Hydroxylgruppen tragen, mit den genannten Vernetzern angewandt werden.

Bei der Härtung der vorgenannten Systeme können Katalysatoren eingesetzt werden, die auf das jeweilige System in fachmännischer Weise abgestimmt sind. Z.B. sind für Systeme aus erfindungsgemäß hergestellten β-Hydroxypolyaminen und Epoxidharzen Säuren wie Salicylsäure, tertiäre Amine oder Aminophenole wie Dimethylaminophenol geeignet.

Im folgenden sind Harze und Verbindungen mit funktionellen Gruppen zur Härtung der erfindungsgemäßen β-Hydroxypolyamine aufgeführt:
Aliphatische Polyepoxidverbindungen z.B. epoxidierte Öle, wie epoxidiertes Leinöl oder epoxidiertes Sojaöl, epoxidierte cyclische Verbindungen wie Vinylcyclohexendiepoxid, Glycidyläther von hydriertem Bisphenol A, 3,4-Epoxycyclohexylmethyl-3,4-epoxycyclohexancarboxylat, Epoxidharze auf Basis von Epichlorhydrin und mehrwertigen Alkoholen wie Pentaerythrit, Trimethylolpropan oder Sorbit, aromatische Epoxidharze, wie Polyglycidyläther von mehrwertigen Phenolen, z.B. Glycidyläther des 4,4'-Diphenylolmethans

oder -propans oder Polyglycidyläther von Novolaken, Glycidylester von aliphatischen oder aromatischen Polycarbonsäuren, z.B. Terephtalsäurediglycidylester, oder Glycidylmethacrylatcopolymere. Hiervon zeichnen sich Kombinationen der erfindungsgemäß hergestellten β-Hydroxypolyamine mit Polyglycidyläthern von mehrwertigen Phenolen wie (R)Beckopox EP 140, EP 301, EP 304 der Hoechst AG (Glycidyläther auf Basis von Bisphenol A mit Epoxydäquivalengewichten von 190, 490 bzw. 900) durch besondere Reaktivität aus, so daß eine Härtung im Temperaturbereich von 20 - 80°C möglich ist.

Als Verbindungen oder Harze, die zur Michael-Addition befähigte Doppelbindungen tragen, kommen z.B. in Frage Acryl- und/oder Methacrylsäureester von mehrwertigen Alkoholen, wie Trimethyloläthan- oder Trimethylolpropantriacrylat und/oder die entsprechenden Methacrylsäureester, Butandioldiacrylat und/oder ungesättigte Polyester auf Basis von Fumar- und/oder Maleinsäure. Diese Polyester können in der Carbonsäurekomponente zusätzlich bis zu 70 %, vorzugsweise bis zu 30 % gesättigte mindestens zweibasische Carbonsäureeinheiten enthalten, welche keine zur Michael-Addition befähigten Doppelbindungen enthalten, wie Ortho-, Iso- oder Terephthalsäure, Tetrahydrophthalsäure, Hexahydrophthalsäure, Adipinsäure. Anstelle von Säuren kann man bei der Herstellung der Polyester natürlich auch von den entsprechenden Anhydriden ausgehen. Als Alkohole kommen für die Herstellung der ungesättigten Polyester vorzugsweise Diole wie Äthylenglykol, 1,2- und 1,3-Propandiol, Diäthylenglykol und/oder Dipropylenglykol in Betracht. Besonders reaktiv sind Kombinationen aus erfindungsgemäß hergestellten β-Hydroxypolyaminen mit mindestens trifunktionellen Acrylestern wie Glycerin-, Trimethyloläthan- bzw. Trimethylolpropan-triacrylat und Pentaerythrittetraacrylat. Solche Kombinationen härten auch unterhalb Raumtemperatur.

Als Isocyanatverbindungen eignen sich aliphatische, cycloaliphatische, araliphatische, aromatische und/oder heterocyclische Mono- und Polyisocyanate, z.B. $^{(R)}$Desmodur N (Handelsname für ein Polyisocyanat auf Basis von Hexamethylendiisocyanat), Isophorodiisocyanat, Toluylendiisocyanate, Diphenylmethandiisocyanat. Kombinationen mit Polyisocyanaten oder Isocyanatgruppen tragenden Harze vernetzen selbst bei Temperaturen unter 0°C sehr schnell.

Für Kombinationen mit verkappten Polyisocyanaten können die im vorangegangenen Absatz genannten Polyisocyanate und/oder Isocyanatgruppen tragenden Harze mit üblichen Verkappungsmitteln wie Phenolen, Alkoholen, Acetessigsäureestern, ε-Caprolactam verwendet werden. Diese Kombinationen sind bei Raumtemperatur stabil und härten im allgemeinen erst bei Temperaturen oberhalb 100°C. In besonderen Fällen, z.B. bei Verwendung von Acetessigsäureestern zur Verkappung, kann auch bereits unter 100°C eine Vernetzung eintreten.

Als Aminharze kommen z.B. handelsübliche Harnstoff- und Melaminharze in Betracht. Die Härtungstemperatur solcher Kombinationen ist vom Aufbau der Harnstoff- und Melaminharze abhängig. So härten z.B. Kombinationen mit Melaminharzen von der Art des Hexamethoxymethylmelamins erst bei Temperaturen oberhalb 150°C, während Kombinationen mit reaktiveren Melaminharzen, die mit weniger Formaldehyd hergestellt und/oder mit sekundären bzw. tertiären Alkoholen veräthert sind, bereits unterhalb 100°C vernetzen.

Kombiniert man die erfindungsgemäß hergestellten β-Hydroxypolyamine mit Verbindungen oder Harzen, die Carbonsäure- und/oder Carbonsäureester- und/oder Carbonsäureanhydridgruppen enthalten, so tritt

Carbonsäureamid- oder -imidbildung ein. Derartige Reaktionen erfolgen z.B. mit gesättigten Alkydharzen wie solchen auf Basis von Isononansäure, Phthalsäureanhydrid und Trimethylolpropan, da diese Harze neben den Estergruppen auch Carboxylgruppen enthalten. Die Härtungstemperatur hängt von der Reaktivität der im Kombinationspartner enthaltenen Carbonsäure-, Carbonsäureester- oder Carbonsäureanhydridgruppen ab. So gelingt es z.B. mit polyfunktionellen Verbindungen oder Harzen, die reaktive Carbonsäureesterbindungen der Malonsäure oder der Acetessigsäure tragen, zu Kombinationen zu gelangen, die bereits bei 80 - 120°C mit den erfindungsgemäß hergestellten aminogruppenhaltigen Harzen vernetzen und die Bildung von Überzügen ermöglichen, während die Vernetzungstemperatur von Kombinationen mit den genannten gesättigten Alkydharzen bei über 120°C, vorzugsweise über 150°C liegt.

Zur Überwindung von Verträglichkeitsproblemen kann es zweckmäßig sein, das erfindungsgemäß hergestellte aminogruppenhaltige Harz mit einem der obengenannten Kombinationspartner zu präkondensieren und gegebenenfalls das erhaltene Präkondensat mit weiteren der oben genannten Reaktionspartner zu kombinieren. Bei der Verwendung von Estern lufttrocknender Fettsäuren wie Sojaöl- oder Leinölfettsäure führt man die Präkondensation, d.i. die zwischen dem Aminogruppen des Polymerisatharzes und den Ester- bzw. Carbonsäuregruppen bei über 100°C ablaufende Amid- oder Imidbildungsreaktion zweckmäßig unter Luftausschluß durch. Die so als Präkondensate erhaltenen Kombinationen härten dann in ähnlicher Weise wie lufttrocknende Alkydharze mit Luftsauerstoff bei Raumtemperatur, zeichnen sich jedoch gegenüber diesen durch verbesserte Antrocknung bei guter Durchtrocknung aus. Als Ester lufttrocknender Fettsäuren kommen dabei solche von

einwertigen Alkoholen, z.B. des Methanols, oder mehrwertigen Alkoholen, insbesondere solchen Produkten in Frage, in denen ein Teil der Hydroxylgruppen des mehrwertigen Alkohols mit gesättigten Carbonsäuren verestert ist, wie in langöligen Alkydharzen mit Phthalsäure.

Solche Kombinationen lassen sich bei entsprechender Auswahl der erfindungsgemäß hergestellten β-Hydroxypolyaminen und der Kombinationspartner in einem breiten Bereich zu Überzügen, aber auch Klebschichten und Verfugungen mit erwünschten Eigenschaften, wie einer guten Lösungsmittelbeständigkeit härten.

Besonders geeignet sind die erfindungsgemäß hergestellten β-Hydroxypolyamine für die Verarbeitung aus wäßriger Lösung oder wäßriger Dispersion, da durch Zugabe von Säure, insbesondere Carbonsäure durch die Bildung von kationischen Gruppen die Wasserlöslichkeit, Wasserdispergierbarkeit und das Emulgiervermögen für hydrophobe Kombinationspartner der erfindungsgemäßen Bindemittel erreichbar sind. Bei der Herstellung von Überzügen aus diesen wäßrigen Dispersionen bzw. wäßrigen Lösungen können übliche Verfahren zur Anwendung gelangen.

Die gewünschten Eigenschaften in Bezug auf Wasserlöslichkeit und Emulgiervermögen nach Säurezugabe lassen sich durch Variation des Gehaltes an basischen Stickstoffatomen einstellen. Mit auf diese Weise optimierten Produkten gelingt es, ohne den Einsatz von niedermolekularen Emulgatoren nach Säurezugabe, lagerstabile wäßrige Lösungen oder wäßrige Dispersionen aus den erfindungsgemäß hergestellten β-Hydroxypolyaminen allein oder deren Kombination mit hydrophoben Kombinationspartnern herzustellen.

Die erfindungsgemäß hergestellten β-Hydroxypolyamine und deren Kombinationen können ohne und mit Pigmenten und/oder

Füllstoffen zu flächenförmigen Formkörpern verarbeitet werden. Bei der Auswahl der Pigmente und Füllstoffe muß man der jeweils vorgesehenen Verarbeitung der Bindemittel-Pigment-Füllstoff-Zusammensetzung Rechnung tragen. Werden die erfindungsgemäßen Bindemittel z.B. als wäßrige Lösung oder Dispersion eingesetzt, bei der die Aminogruppen als Kationen vorliegen, so dürfen naturgemäß alkalische Pigmente oder Füllstoffe wie Zinkoxid, Calciumcarbonat nicht verwendet werden. Saure Pigmente oder Füllstoffe können durch Salzbildung bzw. Überführung der basischen Stickstoffgruppen in Kationen bestimmte Vernetzungsreaktionen beeinflussen, wie die Reaktion mit Doppelbindungen, die zur Michael-Addition befähigt sind.

Natürlich können in allen Fällen statt einheitlicher Produkte auch Gemische eingesetzt werden, also z.B. bei der Ammoniak-Umsetzung Gemische aus Epoxidharzen der Formel I und II.

In protonierter Form sind solche Bindemittelkombinationen besonders geeignet für die kataphoretische Tauchlackierung elektrisch leitender Gegenstände. Insbesonders interessant sind die protonisierten β-Hydroxypolyamine wegen ihrer Lösungsmittelfreiheit bzw. ihres geringen Gehaltes an organischen Lösungsmitteln in großen Automobilkarossentauchbecken, da hier der Einsatz von Bindemittel mit einem möglichst geringen Gehalt an organischen Lösungsmitteln im Tauchbecken angestrebt wird.

<u>Beispiele</u>

1) In einem Autoklaven mit Hub-Schub-Mischer und elektrischer Heizung wurden bei 20°C ein Liter = 1,16 kg Epoxidharz auf Bisphenol-A-Epichlorhydrinbasis mit einem Epoxidäquivalentgewicht von 190 und einer Viskosität von 13000 mPa•s bei 25°C und 6 l flüssiges Ammoniak 8 Stunden gemischt. Im Anschluß daran wurde auf 80°C geheizt und der Ansatz 5 Stunden bei dieser Temperatur gehalten, wobei sich ein Druck von ca. 50 bar einstellte.

Nach Abkühlung auf ca. 30°C wurde der Autoklav über ein Steigrohr entspannt, so daß der größte Teil des Ammoniaks verdampfte. Er wurde in einer Kältefalle aufgefangen und in dieser Form wieder einsetzbar. Die zurückbleibende schaumig-kristalline weiße Masse wurde in einer Reibschale zerkleinert und das entstandene weiße Pulver im Trockenschrank unter vermindertem Druck bei 25 - 35°C von den letzten Spuren von Ammoniak befreit. Ausbeute 1250 g, Schmp. 82°C, Aminzahl 261 mg KOH-Äquivalent/g, OH-Zahl 301 mg KOH-Äquivalent/g, Schmelzviskosität (110°C) 3500 mPa•s.

2) 50 g Epoxidharz wie in Beispiel 1 wurden in einen Schüttelautoklaven gegeben und bei -40°C 290 g Ammoniak einkondensiert. Unter Schütteln wurde die Reaktionsmischung 24 Stunden bei 20°C gehalten. Anschließend wurde auf 80°C aufgeheizt und 4 Stunden bei dieser Temperatur gehalten. Nach der in Beispiel 1 beschriebenen Aufarbeitung wurde ein Produkt mit folgenden Daten erhalten: Schmp. 103°C, Schmelzviskosität (110°C) 2100 mPa•s.

3) Beispiel 2) wurde wiederholt mit dem Unterschied, daß die Reaktionsmischung nur 1 Stunde bei 20°C gehalten wurde und dann einer Reaktionsdauer von 4 Stunden bei 80°C unterworfen wurde. Schmp. 104°C, Schmelzviskosität (110°C) 4100 mPa.s.

4) Vergleich: Beispiel 2) wurde wiederholt mit dem Unterschied, daß die Reaktionsmischung unmittelbar nach dem Einkondensieren des Ammoniaks innerhalb von 90 Minuten auf 80°C erhitzt und bei dieser Temperatur 4 Stunden gehalten wurde. Bei der Aufarbeitung des Rückstandes waren 40 % des erhaltenen Produktes nicht schmelzbar. Der schmelzbare Anteil hatte einen Schmelzpunkt von 90 bis 93°C und zeigte eine Schmelzviskosität (110°C) von 25000 mPa.s.

5) 37,5 g Epoxidfestharz auf Bisphenol-A-Epichlorhydrinbasis entsprechend Formel I ( $R^1$, $R^2$ = $CH_3$) mit einem

Epoxidäquivalentgewicht von 490 und einem Erweichungspunkt nach Durrans von 70°C wurden in einen Schüttelautoklaven in 12,5 g Xylol gelöst und bei -50°C 0,1 Liter flüssiges Ammoniak einkondensiert. Unter Schütteln wurde die Reaktionsmischung auf Raumtemperatur gebracht, wobei sich zwei flüssige Phasen bildeten, und zwar 0,1 Liter einer spezifisch schwereren, das Kunstharz enthaltenen Phase und eine sehr dünnflüssige, ausschließlich aus Ammoniak bestehende obere Phase. Die Bildung dieser beiden Phasen beim Hochheizen von -50°C auf +25°C wurde bei einem Parallelversuch in einem Glas-Autoklaven beobachtet. Nach zweistündigem Schütteln des Autoklaven bei 25°C wurde auf 80°C aufgeheizt und 4 Stunden bei dieser Temperatur gehalten. Der Ansatz wurde, wie in Beispiel 1) beschrieben, aufgearbeitet. Dabei wurde ein von Ammoniak und Xylol freies, festes schmelzbares Produkt mit einer Aminzahl von 105 mg KOH-Äquivalent/g erhalten.

6) Beispiel 5) wurde wiederholt mit dem Unterschied, daß nur 0,043 Liter Ammoniak einkondensiert wurden. Dabei bildete sich nur eine flüssige Phase, die nach einer Haltezeit von 2 Stunden bei Raumtemperatur unter Schütteln auf 80°C aufgeheizt und 4 Stunden bei dieser Temperatur gehalten wurde. Nach der Aufarbeitung gemäß Beispiel 1) wurde ein von Ammoniak und Xylol freies, festes schmelzbares Produkt mit einer Aminzahl von 106 mg KOH-Äquivalent/g erhalten.

Diskussion der Ergebnisse

Die Beispiele 1 bis 4 zeigen, daß die Verfahrensweise bei der ersten Stufe einen großen Einfluß auf das Endprodukt hat. Es ist z.B. deutlich zu erkennen, daß bei längerer Behandlung des Reaktionsgutes in der ersten Stufe die

Viskosität des Endproduktes sinkt, während eine sofortige Erhöhung der Temperatur des Ansatzes auf Reaktionstemperatur eine teilweise Bildung von unschmelzbaren Anteilen und ein erhebliches Ansteigen der Viskosität des schmelzbaren Anteils bewirken.

In den Beispielen 5 und 6 wird das Mischungsverhältnis zwischen dem mit wenig Lösungsmittel verflüssigten Epoxidfestharz der Formel I mit geringem Epoxidgruppengehalt und Ammoniak variiert. Während in Beispiel 5 das Verhältnis 1 : 3,6 betrug, wurde es in Beispiel 6 auf 1 : 1,6 herabgesetzt. Eine merkliche Veränderung der Eigenschaften des Endproduktes tritt dabei nicht auf.

Patentansprüche:

1. Verfahren zur Herstellung von β-Hydroxypolyaminen durch Umsetzung von Polyepoxidverbindungen mit Ammoniak, dadurch gekennzeichnet, daß mindestens eine Polyepoxidverbindung in einer ersten Stufe bei Temperaturen unterhalb 50°C mit flüssigem Ammoniak unter Bildung einer homogenen Phase behandelt wird, worauf in einer zweiten Stufe die Reaktion zwischen der Polyepoxidverbindung und Ammoniak bei 60 bis 130°C vorgenommen wird und das überschüssige Ammoniak nach vollendeter Reaktion aus der Reaktionsmischung entfernt wird.

2. Verfahren nach Anspruch 1, dadurch gekennzeichnet, daß die Temperatur in der ersten Stufe unterhalb 30°C, insbesondere zwischen 10 und 25°C beträgt.

3. Verfahren nach Anspruch 1 oder 2, dadurch gekennzeichnet, daß die Temperaturen in der zweiten Stufe 60 bis 130, vorzugsweise 70 bis 110°C betragen.

4. Verfahren nach einem oder mehreren der Ansprüche 1 bis 3, dadurch gekennzeichnet, daß viskose, flüssige Epoxidverbindungen mit mehr als einer Epoxidgruppe in Molekül ohne Lösungsmittelzusatz umgesetzt werden.

5. Verfahren nach einem oder mehreren der Ansprüche 1 bis 3, dadurch gekennzeichnet, daß höher viskose Epoxidflüssigverbindungen oder feste Epoxidharze mit mehr als einer Epoxidgruppe pro Molekül in Gegenwart von 5-40 Gew.-%, vorzugsweise 10-30 Gew.-% Lösungsmittel, bezogen auf die eingesetzten Mengen Epoxidverbindung, mit Ammoniak umgesetzt werden.

6. Verfahren nach einem oder mehreren der Ansprüche 1 bis 5, dadurch gekennzeichnet, daß Epoxidharze der Formeln

0212483
HOE 86/F 158 J

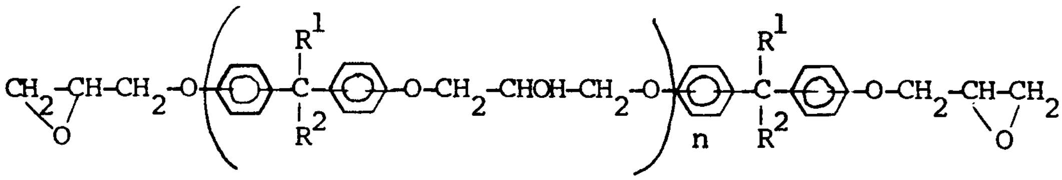

(I)

und/oder (II)

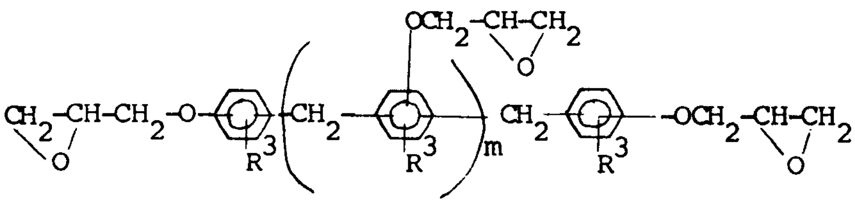

eingesetzt werden, in der $R^1$, $R^2$ und $R^3$ Alkylgruppen mit bis zu 4 C-Atomen, vorzugsweise aber Wasserstoff oder $CH_3$ sind, n Durchschnittswerte von 0 bis 5,9, vorzugsweise bis 2,6 und m Durchschnittswerte von 1 bis 11, vorzugsweise von 1 bis 5,5 besitzt.

7. Verfahren nach Anspruch 6, dadurch gekennzeichnet, daß das Epoxidharz (I) ein durchschnittliches Molekulargewicht von 312 bis 2000, vorzugsweise 312 bis 1100 und das Epoxidharz (II) ein durchschnittliches Molekulargewicht von 474 bis 2100, vorzugsweise 474 bis 1200 besitzt.

8. Verfahren nach Anspruch 6 oder 7, dadurch gekennzeichnet, daß die Epoxidäquivalentgewichte der Epoxidharze (I) zwischen ca. 150 und 1000, vorzugsweise 156 und 550 und die der Epoxidharze (II) zwischen ca. 230 und 1050, vorzugsweise 237 und 600 liegen.

9. Verfahren nach Anspruch 4, dadurch gekennzeichnet, daß Epoxidverbindungen umgesetzt werden, die eine Viskosität von 1000 bis 25000, vorzugsweise 3000 bis 15000 mPa.s (25°C) besitzen.

10. Verfahren nach Anspruch 5, dadurch gekennzeichnet, daß die Viskosität der eingesetzten Mischung aus Epoxidverbindung und Lösungsmittel unter 25000, vorzugsweise unter 15000 mPa.s (25°C) liegt.

11. Verwendung der nach einem oder mehreren der Ansprüche 1 bis 10 erhaltenen β-Hydroxypolyamine als Bindemittel oder - in protonierter Form - als wasserverdünnbares Bindemittel, allein oder in Kombination mit geeigneten Vernetzern.

12. Verwendung des β-Hydroxypolyamins nach Anspruch 11 in protonierter Form für die kathodische Elektrotauchlackierung.